# EUROPEAN PATENT SPECIFICATION

(11) **EP 3 356 850 B1**
(45) Date of publication and mention of the grant of the patent: **21.12.2022**
(21) Application number: 16778631.8
(22) Date of filing: 28.09.2016
(51) Int. Cl.: G01S 3/48, G01S 13/933, G01S 3/02, G01S 13/78

(54) **DISTRIBUTED ANTENNA ARRAY SYSTEMS AND METHODS**
VERTEILTE ANTENNENANORDNUNGSSYSTEME UND VERFAHREN
PROCÉDÉS ET SYSTÈMES DE GROUPEMENT D'ANTENNES RÉPARTIES

(30) Priority: 28.09.2015 US 201562233868 P
(43) Date of publication of application: 08.08.2018
(73) Proprietor: Aviation Communication & Surveillance Systems LLC, Phoenix, AZ 85027 (US); McCullen, Robert J., Queen Creek, AZ 85142 (US); Smith, Mark D., Glendale, AZ 85308 (US)
(72) Inventor: MCCULLEN, Robert J., Queen Creek, AZ 85142 (US); SMITH, Mark D., Glendale, AZ 85308 (US)
(74) Representative: Rupprecht, Kay
(86) International application number: PCT/US2016/054247
(87) International publication number: WO 2017/058958

(56) References cited:
- US-A- 5 657 027
- US-A1- 2012 041 620
- US-B1- 8 279 109
- US-B2- 8 798 911
- US-B2- 9 024 812

## Description

### CROSS-REFERENCE TO RELATED APPLICATION:

This application is related to and claims the benefit and priority of U.S. Provisional Patent Application No. 62/233,868, which was filed September 28, 2015, titled "SYSTEMS AND METHODS FOR PROVIDING A DISTRIBUTED AIRBORNE COLLISION AVOIDANCE SYSTEM ANTENNA ARRAY".

### BACKGROUND:

### Field:

Various communication systems may benefit from suitable antenna systems. For example, unmanned aircraft may benefit from systems and methods for providing a distributed airborne collision avoidance system antenna array.

### Description of the Related Art:

Traditional Traffic Alert/Collision Avoidance System (TCAS) directional antennas are comprised of an array of precisely spaced radiating elements contained within a radome. The spacing of the elements is largely determined by the frequency of operation and the desired radiation pattern. Current TCAS antennas also require an optimal location on an aircraft and are typically larger than would be desired. As an example, the MQ-1 Predator has a fuel bladder running down the spine of the aircraft, so the installation of a typical TCAS antenna may not be suitable in this location, even though this may be the optimal installation location for performance. For many unmanned aircraft systems (UAS), a flexible, lightweight detect and avoid antenna, which is not subject to specific installation constraints, may be required. For example, the conventional antenna may need to be installed on top of an air intake on a Predator and may realize bearing issues caused by reflections or obstructions from the rear fins of the Predator.

As a further example, U.S. Patent Application Publication No. 2012/041620 A1 discloses a system for providing spoof detection configured to be incorporated in a Traffic Collision Avoidance System (TCAS) or related avionics equipment. More in particular, the system is configured to be operatively located on an aircraft (e.g., an airplane or an unmanned aerial vehicle) having at least one upper antenna and at least one lower antenna, and includes one or more receivers, at least one memory including computer instructions, and at least one processor. The receivers may be configured to selectively connect with the upper antenna and the lower antenna of the aircraft.
The prior art document US 8.279,109 B1 discloses detection and avoidance of imminent aircraft collisions with birds or other air borne hazards such as other aircraft.

More particularly, a conventional directional antenna may be too large for many class 3 UAS vehicles, and the ideal antenna location may not be available, due to engineering, aerodynamic, or balance issues.

### SUMMARY:

The present invention provides a solution to the above mentioned aspects according to the independent claims. Preferred embodiments are provided by the dependent claims. The embodiments and/or examples of the following description which are not covered by the claims, are provided for illustrative purpose only and are only intended to assist the reader in understanding the present invention. However, such embodiments and/or examples which are not covered by the claims do not form part of the present invention that is solely defined by the claims.

### BRIEF DESCRIPTION OF THE DRAWINGS:

For proper understanding of the invention, reference should be made to the accompanying drawings, wherein:
Figure 1 illustrates an antenna array according to certain embodiments of the present invention.
Figure 2 illustrates real time calibration according to certain embodiments of the present invention.
Figure 3 illustrates a method according to certain embodiments.

### DETAILED DESCRIPTION:

Certain embodiments of the present invention may provide a distributed antenna system that may utilize an array of monopole antennas with integrated receivers and digital signal processing (DSP) functionality at one or more of the antennas. The monopole antennas with integrated receivers and DSP functionality are herein referred to as "smart antennas." The smart antennas may be mounted remotely from each other, but may still be networked together utilizing high speed Ethernet data busses such that the individual signals from each smart antenna can be summed in the appropriate phase relationship to form a directional antenna pattern. The signals can be simultaneously combined in multiple phase relationships such that bearing can be determined. The smart antennas may be installed in various spatial geometries to take advantage of improved installation locations.

The distributed antenna system according to certain embodiments of the present invention may provide maximum flexibility in the installation of the array configuration on a vehicle, such as an aircraft. The configuration of the antenna array on the aircraft can be dynamic and may be adapted to fit numerous aircraft types and overcome many installation difficulties.

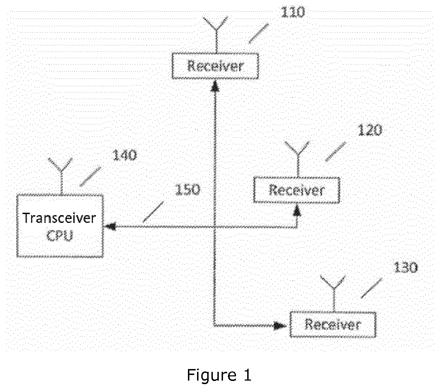

Figure 1 illustrates an antenna array according to certain embodiments of the present invention. Figure 1 shows an exemplary high level architecture with three remote receiver smart antennas 110, 120, and 130, in accordance with embodiments of the present invention. With three remote receivers 110, 120, and 130 and one transceiver 140, the distributed antenna system may be capable of detecting bearing similar to current directional antennas, yet without the strict positional constraints of existing systems. The transceiver 140 can include an ACAS-Xu CPU or similar processor ("ACAS" stands for Airborne Collision Avoidance System).

ACAS Xu is an unmanned variant of the Federal Aviation Administration (FAA) ACAS X standard for collision-avoidance systems for commercial, general-aviation and unmanned aircraft. ACAS Xu can perform active surveillance and coordination as well as passive surveillance using ADS-B messages received from other ACAS/TCAS-equipped aircraft.

In the configuration shown in Figure 1, a single transmitter at the transceiver 140 may be used with a single antenna to transmit 1030 MHz ACAS-Xu interrogations, 1090 MHz transponder replies and ADS-B transmissions. The antennas of the remote receivers 110, 120 and 130, as well as the antenna of the transceiver 140, may receive 1090 MHz transponder replies and ADS-B transmissions. In addition, the remote receive only antennas and transceiver antenna may receive Universal Access Transceiver (UAT) transmissions operating at 978 MHz.

In order for the antenna array to correctly determine bearing, the relative electrical phase of each of the antennas in the array may be calibrated. This phase calibration process may begin by having the relative geometry of the antennas configured in the software at the time of installation, or at any other desired time. The relative geometry can provide a baseline estimate for the calibration data. Following the initialization of the geometry data, a fine electrical calibration may follow with an external signal source transmitting an appropriate signal waveform from various angles around the aircraft. A conventional TCAS ramp tester can be utilized to simulate traffic at very specific angles around the aircraft. This data received from the simulated traffic can then be used to improve the calibration data necessary for the bearing detection. The calibration may also be performed without any relative geometrical information being previously entered.

For continuous maintenance of the calibration data, an additional real time calibration routine can be implemented utilizing the measured bearing from the active surveillance and the calculated bearing from the passive surveillance function (e.g., Automatic Dependent Surveillance - Broadcast (ADS-B)) and updating the calibration data using these sources of known bearing. Patents US9,024,812 and US8,798,911 describe methods of using bearing determined from the ADS-B signals to provide a correction to the bearing measured by the directional antenna. However certain embodiments of the present invention use the ADS-B signals to determine the relative phases of the received signals at each antenna for a given bearing to accomplish the calibration process.

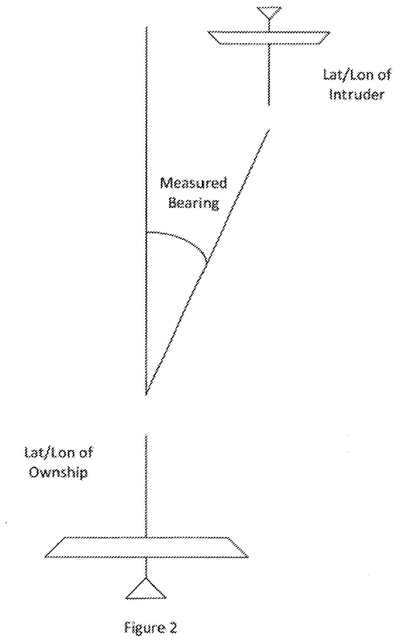

Figure 2 illustrates real time calibration according to certain embodiments of the present invention. Real time calibration can be done periodically with any ADS-B or UAT equipped intruder as a target of opportunity. As shown in Figure 2, a measured bearing can be made. Also, based on the latitude and longitude of the aircraft, a bearing can be calculated. The measured bearing can be compared to the calculated bearing. Thus, the calibration algorithm can adjust the relative phases in real time. This real time calibration can be done at various times throughout the flight to continuously fine tune the bearing detection calibration data.

Also, or alternatively, the real-time calibration can be used for other purposes, such as to detect a fault in one or more of the antennas in the array, to detect tampering with the array, and/or to detect positional spoofing by the target aircraft.

The antenna array can be interconnected by a high speed data bus 150. The high speed data bus 150 can be Ethernet, optical, serial, Low Voltage Differential Signaling (LVDS) or potentially wireless. The high speed data bus 150 can be physical or logical bus arrangement. Alternatively, each of the remote receivers 110, 120 and 130 may be able to communicate only with the transceiver 140 over the high speed data bus 150, but not with one another. The high speed data bus 150 may be configured to operate securely using encryption.

Various implementations of the above-described systems and methods are possible. For example, an apparatus can include a transceiver configured to transmit and receive avionics signals at a host vehicle. The avionics signals can include signals such as ADS-B signals or other signals that are transmitted between or among aircraft or that are transmitted from aircraft to air traffic controllers. As an additional example, all the smart antennas in the array may include transceivers such that the transmission may be directional or omnidirectional. The host vehicle may be an aircraft, such as a UAS or an Unmanned Aerial Vehicle (UAV).

The apparatus can also include an interface configured to communicate with an array of a plurality of avionics receivers. The avionics receivers can be configured to receive the avionics signals at the host vehicle. The interface can be a network interface configured to operate over a bus, such as an Ethernet bus, optical bus, serial bus, or another data bus.

The apparatus can further include a processor configured to determine a relative bearing of a target vehicle to the host vehicle based on at least one signal characteristic of the received avionics signal as received at the transceiver and at least one signal characteristic of each of the received avionics signals as received at the plurality of avionics receivers. The signal characteristic may be phase, time of arrival, or the like.

The processor can also be configured to calculate a relative bearing from data contained in the received avionics signals. For example, the processor can use global positioning system (GPS) data in the received avionics signals and GPS data regarding the host vehicle, together with bearing information about the host vehicle, to calculate a relative bearing of the target vehicle.

The processor can be further configured to compare the calculated relative bearing to the determined relative bearing and self-calibrate based on the comparison. The calibration can involve determining a difference between the measured value of bearing based on the signal characteristics and the calculated value of bearing based on the GPS data. The processor can then make changes to how the measured value is determined based on the determined difference. For example, the processor can infer a different relative geometry of the array of receivers based on the determined difference. Thus, for example, different phase compensations can be assigned to the received phase values associated with the signals respectively received at the various receivers. Tuning of the phase compensations or other aspects of the calculation can be done until the measured value is within a predetermined threshold of the calculated value. The threshold can be set based on a combination of distance and angular accuracy desired. For example, at 200 nautical miles (nm) the angular threshold may be relatively small, whereas at 2 nm the angular threshold may be relatively larger. Alternatively, a single angular threshold may be used for all ranges or distances from the host vehicle.

The apparatus includes a clock configured to be in synchronization with clocks of the array of receivers. The determined relative bearing is based on synchronization between the apparatus clock and the clocks in the receivers within the array.

The apparatus further includes a memory configured with relative geometry of the transceiver and the array of receivers. The processor is configured to determine the relative bearing based on the relative geometry. The relative geometry can be stored in software or firmware. The memory can be non-transitory memory. The memory can be a flash memory, a hard disc drive, or any other read only memory (ROM) or random access memory (RAM). The memory can be on a same chip as the processor or may be separate from the processor. The processor can be an application specific integrated circuit (ASIC), a single core or multi-core central processing unit (CPU), or any other processing device implemented as desired.

An apparatus, according to certain embodiments of the present invention can include a receiver configured to receive avionics signals at a host vehicle. The apparatus can also include a processor configured to digitize the received avionics signals. Associated hardware can include hardware that downconverts a received radio frequency (RF) signal to a baseband frequency. The hardware can also include an analog to digital converter configured to convert the analog baseband signal into a corresponding digital signal. The processor can be configured to perform additional processing, such as extracting data from the signal. Extracted data can include phase information.

The apparatus can include an interface configured to communicate data with an associated transceiver of the host vehicle. The associated transceiver can be configured to process digitized signals received from an array of a plurality of avionics receivers at the host vehicle. The interface can be configured to communicate the digitized baseband signal, a modified form of the digitized baseband signal, such as a sampled or gated representation of the digitized baseband signal, or data based on the digitized baseband signal. The gated representation may be sent, for example, only when a sufficiently strong RF signal is detected. The data based on the digitized baseband signal may include the data contained in the signal as well as metadata about the signal, such as time of arrival of the signal.

The apparatus also includes a clock synchronized to a clock of the transceiver. The data communicated over the interface can include metadata such as respective clock values associated with the received avionics signals.

The receiver, the processor, and the interface can be housed in a case of a corresponding antenna. For example, a single unitary box can house all these components, with a port for external communication, such as digital communication.

A system can include both of the above-described apparatuses in combination. Furthermore, the system can include a bus. The bus can be configured to permit communication between the apparatuses. For example, the bus can be configured to data communication in digital form from each of the receivers to the transceiver.

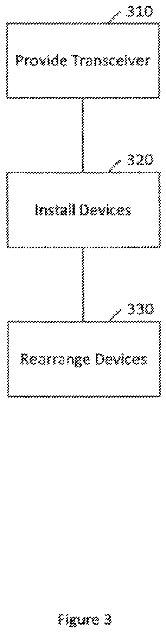

Figure 3 illustrates a method according to certain embodiments. The method of Figure 3 may be performed in connection with the system illustrated in Figure 1. The method can include, at 310, providing, in a first location of a host vehicle, a transceiver configured to transmit and receive avionics signals at the host vehicle. The first location may be dictated by convenience of the installer, or by other considerations, such as requirements for transmission, in case the transceiver is the only transmitting device being provided.

The method can also include, at 320, installing, at a plurality of locations of the host vehicle, a plurality of devices each comprising a receiver configured to receive avionics signals at the host vehicle, a processor configured to digitize the received avionics signals, and an interface configured to communicate data with the transceiver. The transceiver can include an interface configured to communicate with the devices. The plurality of locations are selectable without regard to the first location. For example, the locations may be selected at the whim or convenience of the installer, or for aerodynamic or balance reasons.

The transceiver and plurality of devices can form an antenna array system configured to self-calibrate. The self-calibration can occur as described above, for example with reference to Figure 2.

The method can also include, at 330, rearranging the plurality of devices after an initial installation. The antenna array system can be configured to self-calibrate without explicit indication of the rearrangement. For example, the above-described self-calibration techniques can be used to take into account any arbitrary geometry amongst the plurality of devices.

Certain embodiments of the present invention may have various benefits and/or advantages. For example, certain embodiments of the present invention can involve much smaller packaging than a conventional directional antenna. Moreover, certain embodiments of the present invention can provide additional flexibility over current architectures.

## Claims

1. An apparatus, comprising:
a transceiver (140) configured to transmit and receive avionics signals at a host vehicle; and
an interface configured to communicate with an array of a plurality of avionics receivers (110, 120, 130), wherein the avionics receivers (110, 120, 130) are configured to receive the avionics signals at the host vehicle,
wherein
the avionics receivers (110, 120, 130) each further comprise a respective antenna housed with the corresponding avionics receiver (110, 120, 130),
wherein the apparatus further comprises:
a processor configured to determine a relative bearing of a target vehicle to the host vehicle based on at least one signal characteristic of the received avionics signal as received at the transceiver (140) and at least one signal characteristic of each of the received avionics signals as received at the plurality of avionics receivers (110, 120, 130), and wherein the apparatus is **characterized by** further comprising:
memory configured with relative geometry of the transceiver (140) and the array of receivers (110, 120, 130), wherein the processor is configured to determine the relative bearing based on the relative geometry, and wherein the apparatus further comprises a clock configured to be in synchronization with clocks of the array of receivers (110, 120, 130), wherein the determined relative bearing is based on synchronization between the clock and the clocks.

2. The apparatus of claim 1, wherein the processor is configured to calculate a relative bearing from data contained in the received avionics signals.

3. The apparatus of claim 2, wherein the processor is further configured to compare the calculated relative bearing to the determined relative bearing and self-calibrate based on the comparison.

4. The apparatus of claim 3, wherein the self-calibration comprises calibrating phase of the received avionics signals.

5. An apparatus, comprising:
a receiver (110, 120, 130) configured to receive avionics signals at a host vehicle;
a processor configured to digitize the received avionics signals; and
an interface configured to communicate data with an associated transceiver (140) of the host vehicle, wherein the associated transceiver (140) is configured to process digitized signals received from an array of a plurality of avionics receivers (110, 120, 130) at the host vehicle,
wherein
the receiver (110, 120, 130), the processor, and the interface are housed in a case of a corresponding antenna, wherein the apparatus further comprises:
a processor configured to determine a relative bearing of a target vehicle to the host vehicle based on at least one signal characteristic of the received avionics signal as received at the transceiver (140) and at least one signal characteristic of each of the received avionics signals as received at the plurality of avionics receivers (110, 120, 130), and wherein the apparatus is **characterized by** further comprising:
memory configured with relative geometry of the transceiver (140) and the array of receivers (110, 120, 130), wherein the processor is configured to determine the relative bearing based on the relative geometry, and wherein the apparatus further comprises a clock synchronized to a clock of the transceiver (140), wherein the data comprises respective clock values associated with the received avionics signals.

6. A system comprising:
a transceiver (140) configured to transmit and receive avionics signals at a host vehicle;
a plurality of devices each comprising a receiver (110, 120, 130) configured to receive avionics signals at the host vehicle, a processor configured to digitize the received avionics signals, and an interface configured to communicate data with the transceiver (140),
wherein the transceiver (140) comprises an interface configured to communicate with the devices,
wherein
the receiver (110, 120, 130), the processor, and the interface are housed in a case of a corresponding antenna, wherein the system further comprises:
a processor configured to determine a relative bearing of a target vehicle to the host vehicle based on at least one signal characteristic of the received avionics signal as received at the transceiver (140) and at least one signal characteristic of each of the received avionics signals as received at the plurality of avionics receivers (110, 120, 130), and wherein the system is **characterized by** further comprising:
memory configured with relative geometry of the transceiver (140) and the array of receivers (110, 120, 130), wherein the processor is configured to determine the relative bearing based on the relative geometry, and wherein the system further comprises a clock synchronized to a clock of the transceiver (140), wherein the data comprises respective clock values associated with the received avionics signals.

7. The system of claim 6, wherein the transceiver (140) further comprises a processor configured to determine a relative bearing of a target vehicle to the host vehicle based on at least one signal characteristic of the received avionics signal as received at the transceiver (140) and at least one signal characteristic of each of the received avionics signals as received at the plurality of devices.

8. The system of claim 6, further comprising:
a bus (150) connecting the transceiver (140) to the plurality of devices, wherein the bus (150) is configured to permit communication between the transceiver (140) and the plurality of devices.

9. A method, comprising:
providing (310), in a first location of a host vehicle, a transceiver (140) configured to transmit and receive avionics signals at the host vehicle;
installing (320), at a plurality of locations of the host vehicle, a plurality of devices each comprising a receiver (110, 120, 130) configured to receive avionics signals at the host vehicle, a processor configured to digitize the received avionics signals, and an interface configured to communicate data with the transceiver (140),
wherein the transceiver (140) comprises an interface configured to communicate with the devices,
wherein the plurality of locations are selectable without regard to the first location, and
wherein the transceiver (140) and plurality of devices form an antenna array system configured to self-calibrate,
wherein
the avionics transceiver (140) further comprises an antenna housed with the corresponding avionics transceiver (140), wherein
the processor is configured to determine a relative bearing of a target vehicle to the host vehicle based on at least one signal characteristic of the received avionics signal as received at the transceiver (140) and at least one signal characteristic of each of the received avionics signals as received at the plurality of avionics receivers (110, 120, 130), and wherein
a memory is configured with relative geometry of the transceiver (140) and the array of receivers (110, 120, 130), wherein the processor is configured to determine the relative bearing based on the relative geometry, and wherein
a clock is configured to be synchronized to a clock of the transceiver (140), wherein the data comprises respective clock values associated with the received avionics signals.

10. The method of claim 9, further comprising:
rearranging the plurality of devices after an initial installation, wherein the antenna array system is configured to self-calibrate without explicit indication of the rearrangement.

## Patentansprüche

1. Vorrichtung, umfassend:
einen Sendeempfänger (140), der dazu eingerichtet ist, Avionik-Signale an einem Host-Fahrzeug zu senden und zu empfangen; und eine Schnittstelle, die dazu eingerichtet ist, mit einem Array aus einer Vielzahl von Avionik-Empfängern (110, 120, 130) zu kommunizieren, wobei die Avionik-Empfänger (110, 120, 130) dazu eingerichtet sind, die Avionik-Signale an dem Host-Fahrzeug zu empfangen,
wobei
die Avionik-Empfänger (110, 120, 130) jeweils ferner eine entsprechende Antenne umfassen, die mit den entsprechenden Avionik-Empfängern (110, 120, 130) untergebracht ist,
wobei die Vorrichtung ferner umfasst:
einen Prozessor, der dazu eingerichtet ist, eine Seitenpeilung eines Zielfahrzeugs zum Host-Fahrzeug auf der Grundlage von mindestens einer Signaleigenschaft des empfangenen Avionik-Signals, wie es an dem Sendeempfänger (140) empfangen wird, und mindestens einer Signaleigenschaft von jedem der empfangenen Avionik-Signale, wie sie an der Vielzahl von Avionik-Empfängern (110, 120, 130) empfangen werden, zu ermitteln, und wobei die Vorrichtung **dadurch gekennzeichnet, dass** sie ferner umfasst:
einen Speicher, der mit der relativen Geometrie des Sendeempfängers (140) und des Arrays von Empfängern (110, 120, 130) konfiguriert ist, wobei der Prozessor dazu eingerichtet ist, die Seitenpeilung auf der Grundlage der relativen Geometrie zu ermitteln, und wobei die Vorrichtung ferner eine Uhr umfasst, die dazu eingerichtet ist, mit Uhren des Arrays von Empfängern (110, 120, 130) synchronisiert zu sein, wobei die ermittelte Seitenpeilung auf der Synchronisierung zwischen der Uhr und den Uhren basiert.

2. Vorrichtung nach Anspruch 1, wobei der Prozessor dazu eingerichtet ist, eine Seitenpeilung anhand von Daten zu berechnen, die in den empfangenen Avionik-Signalen enthalten sind.

3. Vorrichtung nach Anspruch 2, wobei der Prozessor ferner dazu eingerichtet ist, die berechnete Seitenpeilung mit der ermittelten Seitenpeilung zu vergleichen und sich auf der Grundlage des Vergleichs selbst zu kalibrieren.

4. Vorrichtung nach Anspruch 3, wobei die Selbstkalibrierung eine Kalibrierungsphase der empfangenen Avionik-Signale umfasst.

5. Vorrichtung, umfassend:
einen Empfänger (110, 120, 130), der dazu eingerichtet ist, Avionik-Signale an einem Host-Fahrzeug zu empfangen;
einen Prozessor, der dazu eingerichtet ist, die empfangenen Avionik-Signale in digitale Form zu bringen; und
eine Schnittstelle, die dazu eingerichtet ist, mit einem zugeordneten Sendeempfänger (140) des Host-Fahrzeugs Daten auszutauschen, wobei der zugeordnete Sendeempfänger (140) dazu eingerichtet ist, digitalisierte Signale zu verarbeiten, die an dem Host-Fahrzeug von einen Array aus einer Vielzahl von Avionik-Empfängern (110, 120, 130) empfangen werden, wobei
der Empfänger (110, 120, 130), der Prozessor und die Schnittstelle in einem Gehäuse einer entsprechenden Antenne untergebracht sind, wobei die Vorrichtung ferner umfasst:
einen Prozessor, der dazu eingerichtet ist, eine Seitenpeilung eines Zielfahrzeugs zum Host-Fahrzeug auf der Grundlage von mindestens einer Signaleigenschaft des empfangenen Avionik-Signals, wie es an dem Sendeempfänger (140) empfangen wird, und mindestens einer Signaleigenschaft von jedem der empfangenen Avionik-Signale, wie sie an der Vielzahl von Avionik-Empfängern (110, 120, 130) empfangen werden, zu ermitteln, und wobei die Vorrichtung **dadurch gekennzeichnet, dass** sie ferner umfasst:
einen Speicher, der mit der relativen Geometrie des Sendeempfängers (140) und des Arrays von Empfängern (110, 120, 130) konfiguriert ist, wobei der Prozessor dazu eingerichtet ist, die Seitenpeilung auf der Grundlage der relativen Geometrie zu ermitteln, und wobei die Vorrichtung ferner eine Uhr umfasst, die mit einer Uhr des Sendeempfängers (140) synchronisiert ist, wobei die Daten jeweilige Uhrzeitwerte umfassen, die mit den empfangenen Avionik-Signalen verknüpft sind.

6. System, umfassend:
einen Sendeempfänger (140), der dazu eingerichtet ist, Avionik-Signale an einem Host-Fahrzeug zu senden und zu empfangen; eine Vielzahl von Vorrichtungen, die jeweils einen Empfänger (110, 120, 130), der dazu eingerichtet ist, Avionik-Signale an dem Host-Fahrzeug zu empfangen, einen Prozessor, der dazu eingerichtet ist, die empfangenen Avionik-Signale in digitale Form zu bringen, und eine Schnittstelle umfassen, die dazu eingerichtet ist, mit dem Sendeempfänger (140) Daten auszutauschen,
wobei der Sendeempfänger (140) eine Schnittstelle umfasst, die dazu eingerichtet ist, mit den Vorrichtungen zu kommunizieren,
wobei
der Empfänger (110, 120, 130), der Prozessor und die Schnittstelle in einem Gehäuse einer entsprechenden Antenne untergebracht sind, wobei das System ferner umfasst:
einen Prozessor, der dazu eingerichtet ist, eine Seitenpeilung eines Zielfahrzeugs zum Host-Fahrzeug auf der Grundlage von mindestens einer Signaleigenschaft des empfangenen Avionik-Signals, wie es an dem Sendeempfänger (140) empfangen wird, und mindestens einer Signaleigenschaft von jedem der empfangenen Avionik-Signale, wie sie an der Vielzahl von Avionik-Empfängern (110, 120, 130) empfangen werden, zu ermitteln, und wobei das System **dadurch gekennzeichnet, dass** es ferner umfasst:
einen Speicher, der mit der relativen Geometrie des Sendeempfängers (140) und des Arrays von Empfängern (110, 120, 130) konfiguriert ist, wobei der Prozessor dazu eingerichtet ist, die Seitenpeilung auf der Grundlage der relativen Geometrie zu ermitteln, und wobei das System ferner eine Uhr umfasst, die mit einer Uhr des Sendeempfängers (140) synchronisiert ist, wobei die Daten jeweilige Uhrzeitwerte umfassen, die mit den empfangenen Avionik-Signalen verknüpft sind.

7. System nach Anspruch 6, wobei der Sendeempfänger (140) ferner einen Prozessor umfasst, der dazu eingerichtet ist, eine Seitenpeilung eines Zielfahrzeugs zum Host-Fahrzeug auf der Grundlage mindestens einer Signaleigenschaft des empfangenen Avionik-Signals, wie es an dem Sendeempfänger (140) empfangen wird, und mindestens einer Signaleigenschaft von jedem der empfangenen Avionik-Signale, wie sie an der Vielzahl von Vorrichtungen empfangen werden, zu ermitteln.

8. System nach Anspruch 6, ferner umfassend:
einen Bus (150), der den Sendeempfänger (140) mit der Vielzahl von Vorrichtungen verbindet, wobei der Bus (150) dazu eingerichtet ist, die Kommunikation zwischen dem Sendeempfänger (140) und der Vielzahl von Vorrichtungen zuzulassen.

9. Verfahren, umfassend:
Bereitstellen (310) an einem ersten Ort eines Host-Fahrzeugs eines Sendeempfängers (140), der dazu eingerichtet ist, Avionik-Signale an dem Host-Fahrzeug zu senden und zu empfangen;
Installieren (320) an einer Vielzahl von Orten des Host-Fahrzeugs einer Vielzahl von Vorrichtungen, die jeweils einen Empfänger (110, 120, 130), der dazu eingerichtet ist, Avionik-Signale an dem Host-Fahrzeug zu empfangen, einen Prozessor, der dazu eingerichtet ist, die empfangenen Avionik-Signale in digitale Form zu bringen, und eine Schnittstelle umfassen, die dazu eingerichtet ist, mit dem Sendeempfänger (140) Daten auszutauschen,
wobei der Sendeempfänger (140) eine Schnittstelle umfasst, die dazu eingerichtet ist, mit den Vorrichtungen zu kommunizieren,
wobei die Vielzahl von Orten ungeachtet des ersten Orts gewählt werden können, und wobei der Sendeempfänger (140) und die Vielzahl von Vorrichtungen ein Antennenarray-System bilden, das dazu eingerichtet ist, sich selbst zu kalibrieren,
wobei
der Avionik-Sendeempfänger (140) ferner eine Antenne umfasst, die mit dem entsprechenden Avionik-Sendeempfänger (140) untergebracht ist, wobei der Prozessor dazu eingerichtet ist, eine Seitenpeilung eines Zielfahrzeugs zum Host-Fahrzeug auf der Grundlage von mindestens einer Signaleigenschaft des empfangenen Avionik-Signals, wie es an dem Sendeempfänger (140) empfangen wird, und mindestens einer Signaleigenschaft von jedem der empfangenen Avionik-Signale, wie sie an der Vielzahl von Avionik-Empfängern (110, 120, 130) empfangen werden, zu ermitteln, und wobei
ein Speicher mit der relativen Geometrie des Sendeempfängers (140) und des Arrays von Empfängern (110, 120, 130) konfiguriert ist, wobei der Prozessor dazu eingerichtet ist, die Seitenpeilung auf der Grundlage der relativen Geometrie zu ermitteln, und wobei
eine Uhr dazu eingerichtet ist, mit einer Uhr des Sendeempfängers (140) synchronisiert zu werden, wobei die Daten jeweilige Uhrzeitwerte umfassen, die mit den empfangenen Avionik-Signalen verknüpft sind.

10. Verfahren nach Anspruch 9, ferner umfassend:
neu Anordnen der Vielzahl von Vorrichtungen nach einer Erstinstallation, wobei das Antennenarray-System dazu eingerichtet ist, sich ohne ausdrückliche Angabe der neuen Anordnung selbst zu kalibrieren.

## Revendications

1. Appareil comprenant :
un émetteur-récepteur (140) conçu pour émettre et recevoir des signaux avioniques au niveau d'un véhicule hôte ; et
une interface conçue pour communiquer avec un réseau d'une pluralité de récepteurs avioniques (110, 120, 130), les récepteurs avioniques (110, 120, 130) étant conçus pour recevoir les signaux avioniques au niveau du véhicule hôte,
les récepteurs avioniques (110, 120, 130) comprenant chacun en outre une antenne respective logée avec le récepteur avionique correspondant (110, 120, 130),
l'appareil comprenant en outre :
un processeur conçu pour déterminer un gisement d'un véhicule cible par rapport au véhicule hôte sur la base d'au moins une caractéristique de signal du signal avionique reçu tel que reçu au niveau de l'émetteur-récepteur (140) et d'au moins une caractéristique de signal de chacun des signaux avioniques reçus tels que reçus au niveau de la pluralité de récepteurs avioniques (110, 120, 130) et l'appareil étant **caractérisé en ce qu'**il comprend en outre :
une mémoire conçue avec une géométrie relative de l'émetteur-récepteur (140) et du réseau de récepteurs (110, 120, 130), le processeur étant conçu pour déterminer le gisement sur la base de la géométrie relative et l'appareil comprenant en outre une horloge conçue pour être en synchronisation avec des horloges du réseau de récepteurs (110, 120, 130), le gisement déterminé étant basé sur une synchronisation entre l'horloge et les horloges.

2. Appareil selon la revendication 1, le processeur étant conçu pour calculer un gisement à partir de données contenues dans les signaux avioniques reçus.

3. Appareil selon la revendication 2, le processeur étant en outre conçu pour comparer le gisement calculé au gisement déterminé et pour s'auto-étalonner sur la base de la comparaison.

4. Appareil selon la revendication 3, l'auto-étalonnage comprenant l'étalonnage de la phase des signaux avioniques reçus.

5. Appareil comprenant :
un récepteur (110, 120, 130) conçu pour recevoir des signaux avioniques au niveau d'un véhicule hôte ;
un processeur conçu pour numériser les signaux avioniques reçus ; et
une interface conçue pour communiquer des données avec un émetteur-récepteur associé (140) du véhicule hôte, l'émetteur-récepteur associé (140) étant conçu pour traiter des signaux numérisés reçus à partir d'un réseau d'une pluralité de récepteurs avioniques (110, 120, 130) au niveau du véhicule hôte,
le récepteur (110, 120, 130), le processeur et l'interface étant logés dans un boîtier d'une antenne correspondante, l'appareil comprenant en outre :
un processeur conçu pour déterminer un gisement d'un véhicule cible par rapport au véhicule hôte sur la base d'au moins une caractéristique de signal du signal avionique reçu tel que reçu au niveau de l'émetteur-récepteur (140) et d'au moins une caractéristique de signal de chacun des signaux avioniques reçus tels que reçus au niveau de la pluralité de récepteurs avioniques (110, 120, 130) et l'appareil étant **caractérisé en ce qu'**il comprend en outre :
une mémoire conçue avec une géométrie relative de l'émetteur-récepteur (140) et du réseau de récepteurs (110, 120, 130), le processeur étant conçu pour déterminer le gisement sur la base de la géométrie relative et l'appareil comprenant en outre une horloge synchronisée sur une horloge de l'émetteur-récepteur (140), les données comprenant des valeurs d'horloge respectives associées aux signaux avioniques reçus.

6. Système comprenant :
un émetteur-récepteur (140) conçu pour émettre et recevoir des signaux avioniques au niveau d'un véhicule hôte ;
une pluralité de dispositifs comprenant chacun un récepteur (110, 120, 130) conçu pour recevoir des signaux avioniques au niveau du véhicule hôte, un processeur conçu pour numériser les signaux avioniques reçus et une interface conçue pour communiquer des données avec l'émetteur-récepteur (140),
l'émetteur-récepteur (140) comprenant une interface conçue pour communiquer avec les dispositifs,
le récepteur (110, 120, 130), le processeur et l'interface étant logés dans un boîtier d'une antenne correspondante, le système comprenant en outre :
un processeur conçu pour déterminer un gisement d'un véhicule cible par rapport au véhicule hôte sur la base d'au moins une caractéristique de signal du signal avionique reçu tel que reçu au niveau de l'émetteur-récepteur (140) et d'au moins une caractéristique de signal de chacun des signaux avioniques reçus tels que reçus au niveau de la pluralité de récepteurs avioniques (110, 120, 130) et le système étant **caractérisé en ce qu'**il comprend en outre :
une mémoire conçue avec une géométrie relative de l'émetteur-récepteur (140) et du réseau de récepteurs (110, 120, 130), le processeur étant conçu pour déterminer le gisement sur la base de la géométrie relative et le système comprenant en outre une horloge synchronisée sur une horloge de l'émetteur-récepteur (140), les données comprenant des valeurs d'horloge respectives associées aux signaux avioniques reçus.

7. Système selon la revendication 6, l'émetteur-récepteur (140) comprenant en outre un processeur conçu pour déterminer un gisement d'un véhicule cible par rapport au véhicule hôte sur la base d'au moins une caractéristique de signal du signal avionique reçu tel que reçu au niveau de l'émetteur-récepteur (140) et d'au moins une caractéristique de signal de chacun des signaux avioniques reçus tels que reçus au niveau de la pluralité de dispositifs.

8. Système selon la revendication 6, comprenant en outre :
un bus (150) reliant l'émetteur-récepteur (140) à la pluralité de dispositifs, le bus (150) étant conçu pour permettre une communication entre l'émetteur-récepteur (140) et la pluralité de dispositifs.

9. Procédé comprenant :
la mise à disposition (310), dans un premier emplacement d'un véhicule hôte, d'un émetteur-récepteur (140) conçu pour émettre et recevoir des signaux avioniques au niveau du véhicule hôte ;
l'installation (320), au niveau d'une pluralité d'emplacements du véhicule hôte, d'une pluralité de dispositifs comprenant chacun un récepteur (110, 120, 130) conçu pour recevoir des signaux avioniques au niveau du véhicule hôte, d'un processeur conçu pour numériser les signaux avioniques reçus et d'une interface conçue pour communiquer des données avec l'émetteur-récepteur (140),
l'émetteur-récepteur (140) comprenant une interface conçue pour communiquer avec les dispositifs,
la pluralité d'emplacements pouvant être sélectionnés sans tenir compte du premier emplacement et
l'émetteur-récepteur (140) et la pluralité de dispositifs formant un système de réseau d'antennes conçu pour s'auto-étalonner,
l'émetteur-récepteur avionique (140) comprenant en outre une antenne logée avec l'émetteur-récepteur avionique correspondant (140),
le processeur étant conçu pour déterminer un gisement d'un véhicule cible par rapport au véhicule hôte sur la base d'au moins une caractéristique de signal du signal avionique reçu tel que reçu au niveau de l'émetteur-récepteur (140) et d'au moins une caractéristique de signal de chacun des signaux avioniques reçus tels que reçus au niveau de la pluralité de récepteurs avioniques (110, 120, 130) et
une mémoire étant conçue avec une géométrie relative de l'émetteur-récepteur (140) et du réseau de récepteurs (110, 120, 130), le processeur étant conçu pour déterminer le gisement sur la base de la géométrie relative et
une horloge étant conçue pour être synchronisée sur une horloge de l'émetteur-récepteur (140), les données comprenant des valeurs d'horloge respectives associées aux signaux avioniques reçus.

10. Procédé selon la revendication 9, comprenant en outre :
le réagencement de la pluralité de dispositifs après une installation initiale, le système de réseau d'antennes étant conçu pour s'auto-étalonner sans indication explicite du réarrangement.
